# DEMANDE DE BREVET EUROPEEN

(11) **EP 4 309 761 A1**
(43) Date de publication de la demande: **24.01.2024**
(21) Numéro de dépôt: 23184229.5
(22) Date de dépôt: 07.07.2023
(51) Int. Cl.: B01D 46/00, B01D 46/30, B01D 53/02, E21F 1/00

(54) **SYSTEME DE CAPTAGE DE PARTICULES DE L AIR AU SEIN D'UNE STATION CONFINEE DE TRANSPORT EN COMMUN AVEC DISPOSITIF DE FILTRATION INTEGRE AU SEIN DE LA STATION CONFINEE**

(30) Priorité: 20.07.2022 FR 2207453
(71) Demandeur: IFP Energies nouvelles, 92500 Rueil-Malmaison (FR)
(72) Inventeur: CHARMASSON, Sebastien, 92852 RUEIL-MALMAISON CEDEX (FR); DELEAU, Fabrice, 92852 RUEIL-MALMAISON CEDEX (FR); RICHARD, Florence, 92852 RUEIL-MALMAISON CEDEX (FR); TEIXEIRA, David, 92852 RUEIL-MALMAISON CEDEX (FR)
(74) Mandataire: IFP Energies nouvelles

(57) **Abrégé**

La présente invention concerne un système de captage des particules (1) de l'air au sein d'une station confiné, notamment souterraine. Le système de captage comprend des moyens d'aspiration (2), un dispositif de filtration (4), et des moyens de distribution de l'air filtré (9). Le dispositif de filtration (4) comprend au moins un lit granulaire (5). De plus, le dispositif de filtration (4) est intégré dans la structure de la station confinée (par exemple un mur, ou un support de portes).

## Description

### Domaine technique

La présente invention concerne le domaine du traitement de l'air dans des espaces confinés ou semi-confinés, tels qu'une station souterraine de transport en commun, notamment dans le cas de réseaux de transports souterrains de type ferrés (par exemple : métro, RER pour « Réseau Express Régional » d'Île-de-France).

Dans le cas de réseaux de transports souterrains de type ferrés, ces espaces confinés ou semi-confinés, incluent les gares, les couloirs, les rames, les tunnels, les locaux commerciaux, les locaux techniques et les centres de dépannage des trains.

De manière générale, ces espaces peuvent être fréquentés par une population de passage, des usagers, et/ou par une population plus ou moins permanente, comme un personnel d'exploitation ou des commerçants.

Les particules présentes dans l'atmosphère ou l'air ambiant peuvent avoir de nombreuses origines et/ou résulter de processus d'évolution complexes faisant intervenir des phénomènes de transport sur de larges échelles et de transformation photochimique notamment. En particulier les particules en suspension dans l'air peuvent provenir également de l'usure des pneumatiques ou des organes de freinage des véhicules, ou tout simplement de la dégradation des revêtements routiers ou ferroviaires (poussières). Leur petite taille, de l'ordre de quelques microns, explique leur maintien en suspension dans l'air. Pour les enceintes ferroviaires souterraines (EFS) les constituants majeurs identifiés sont différents matériaux dont le fer, du carbone élémentaire et du carbone organique. On peut aussi ajouter les poussières terrigènes, notamment composées de silice, liées à l'érosion des sols.

De plus, si les moyens de transport sont entraînés par des moteurs thermiques, la combustion de carburant dans ces moteurs thermiques est une source importante d'émission de particules, telles que les particules fines riches en HAP (hydrocarbures aromatiques polycycliques), mais aussi les particules de suie, les particules métalliques, les particules issues de processus de nucléation à partir de plusieurs types d'espèces chimiques volatiles, ou encore une combinaison de ces différents types de particules.

Ces particules, dont les sources sont très nombreuses, présentent une très grande variabilité de taille, allant du nanomètre à plusieurs dizaines de microns, et une très grande variabilité de composition qui peut être organique et/ou inorganique. En particulier, les particules fines représentent l'un des principaux facteurs de risque liés à la pollution de l'air en milieu urbain de développer un cancer. Les particules fines peuvent se révéler particulièrement toxiques car elles pénètrent profondément les poumons et l'arbre bronchique.

Dans ces différents lieux confinés ou semi-confinés, sont généralement installés des systèmes de ventilation et d'extraction et/ou d'insufflation d'air, qui ont pour but d'améliorer la qualité de l'air, en le renouvelant par de l'air « frais » insufflé prélevé à l'extérieur et/ou par extraction et rejet à l'extérieur d'air vicié. Dans certains cas, une dépollution de l'air vicié est réalisée dans des installations dites « en dérivation », l'air étant extrait, dépollué, puis réinjecté.

Cependant, ces systèmes s'avèrent insuffisants pour garantir une qualité d'air correcte dans ces lieux confinés. Par exemple, pour les réseaux ferrés de type métro, on vient prélever de l'air extérieur urbain pour renouveler l'air. Or l'air urbain peut déjà présenter un niveau de pollution significatif, notamment en termes de particules fines mais également en termes de polluants gazeux (comme les NOx, les COV, ou les dérivés soufrés comme les oxydes de soufre SOx), notamment du fait du trafic automobile, du chauffage urbain, ou d'activités industrielles proches.

Il existe donc un réel besoin de traiter l'air arrivant dans et/ou extrait de ces espaces confinés, pour améliorer la qualité de l'air dans ces espaces, et/ou l'air dans leur voisinage.

### Technique antérieure

Plusieurs technologies ont été développées pour traiter l'air de ces espaces confinés ou semi-confinés.

La demande de brevet FR 3117375 (WO2022/122463) concerne un dispositif et procédé pour dépolluer l'air de milieux confinés ou semi-confinés au moyen d'un filtre TFP ("Turbulent Flow Precipitator" en anglais, et "Précipitateur à Flux Turbulent" en français) amélioré. Un tel système nécessite de créer des turbulences dans le flux gazeux, et des moyens pour piéger les particules. Dans le système, le flux d'air circule parallèlement au filtre, par conséquent, la filtration n'est pas maximale. De plus, cette demande de brevet ne prévoit pas d'agencement spécifique du système de captage des particules dans une station souterraine de transport en commun.

La demande de brevet FR3046663 concerne un procédé de collecte des particules fines générées lors du freinage d'un train. Le procédé comprend des étapes d'aspiration, de purification, et de distribution de l'air filtré. Ce document prévoit la mise en oeuvre d'un filtre HEPA (filtre à air à haute efficacité de l'anglais « high-efficiency particulate air »). Toutefois, un tel filtre est à perte de charge élevée, et nécessite une installation spécifique au sein de la station souterraine de transport, alors que l'espace est limité. Par exemple, l'installation peut entraver le déplacement des utilisateurs sur le quai, ce qui a un impact sur la sécurité et sur la fluidité des transports.

### Résumé de l'invention

L'invention a pour but de capter des particules de l'air au sein d'une station confinée de transport en commun, au moyen d'un système efficace, robuste, économique, peu bruyant et peu encombrant au sein de la station de transport. Dans ce but, la présente invention concerne un système de captage des particules de l'air au sein d'une station confiné, notamment souterraine. Le système de captage comprend des moyens d'aspiration, un dispositif de filtration, et des moyens de distribution de l'air filtré. Le dispositif de filtration comprend au moins un lit granulaire. De plus, le dispositif de filtration est intégré dans la structure de la station confinée (par exemple un mur, ou un support de portes). La filtration par lit granulaire permet une filtration robuste et efficace des particules de petites dimensions, et permet de réaliser un dispositif de filtration sous différentes formes qui peuvent facilement s'intégrer dans une structure de la station confinée. Ainsi, le système de captage de particules est peu encombrant, et il ne perturbe pas le déplacement des utilisateurs sur le quai. De plus, le dispositif de filtration ne comprend que des éléments simples, ce qui le rend économique et peu bruyant.

L'invention concerne un système de captage de particules de l'air au sein d'une station confinée de transport en commun, ledit système de captage de particules comprend des moyens d'aspiration de l'air présent au sein de ladite station confinée, un dispositif de filtration de l'air issu desdits moyens d'aspiration, et des moyens de distribution de l'air filtré issu dudit dispositif de filtration au sein de ladite station confinée. Ledit dispositif de filtration comprend au moins un lit granulaire traversé par la totalité du flux d'air dudit dispositif de filtration, et en ce que ledit dispositif de filtration est intégré dans une structure de ladite station confinée.

Selon un mode de réalisation, ledit lit granulaire est situé à hauteur d'homme.

Conformément à une mise en oeuvre, ledit dispositif de filtration comprend en outre un filtre aimanté, ledit filtre aimanté étant agencé en amont dudit lit granulaire dans la circulation du flux d'air, ledit filtre aimanté étant traversé par la totalité du flux d'air dudit dispositif de filtration.

Selon une configuration, ledit lit granulaire est agencé sur un mur de ladite station confinée.

Avantageusement, ledit lit granulaire est plan.

De manière avantageuse, ledit lit granulaire comprend une entrée d'air du côté du mur de ladite station confinée et une sortie d'air du côté opposé au mur de ladite station confinée, ledit lit granulaire étant traversé sensiblement horizontalement par ledit flux d'air.

De préférence, lesdits moyens d'aspiration sont agencés sur un sol d'un quai de ladite station confinée ou sur le pourtour desdits moyens de filtration.

Selon une configuration, ledit lit granulaire est agencé dans un support de portes bordant au moins une voie de circulation de transport en commun de ladite station confinée, ou dans un support de voûte de ladite station confinée.

Avantageusement, ledit lit granulaire est annulaire.

De préférence, ledit lit granulaire comprend une entrée d'air au centre dudit support de portes ou dudit support de voûte, et une sortie d'air à la périphérie de la base dudit support de portes ou dudit support de voûte, ledit lit granulaire étant traversé sensiblement horizontalement par ledit flux d'air.

De manière avantageuse, lesdits moyens d'aspiration sont agencés au sommet dudit support de portes ou dudit support de voûte.

Selon un aspect, lesdits moyens d'aspiration comprennent un ventilateur, de préférence un ventilateur tangentiel ou un ventilateur centrifuge.

Selon une mise en oeuvre, ledit lit granulaire comprend une ouverture de vidange gravitaire et/ou une ouverture de remplissage gravitaire.

Selon une option de réalisation, le lit granulaire comprend des particules solides ayant une taille comprise entre 0,5 mm et 5 mm, et une rugosité comprise entre 1 et 100 µm.

Conformément à un mode de réalisation, ledit lit granulaire a une épaisseur comprise entre 1,5 et 10 cm, de préférence entre 2 et 5 cm.

D'autres caractéristiques et avantages du système selon l'invention, apparaîtront à la lecture de la description ci-après d'exemples non limitatifs de réalisations, en se référant aux figures annexées et décrites ci-après.

### Liste des figures

La figure 1 illustre un système de captage selon une première variante du premier mode de réalisation de l'invention en vue de face.
La figure 2 illustre une vue en coupe du système de captage selon la première variante du premier mode de réalisation de la figure 1.
La figure 3 illustre un système de captage selon une deuxième variante du premier mode de réalisation de l'invention en vue de face.
La figure 4 illustre un système de captage selon une troisième variante du deuxième mode de réalisation de l'invention en vue de face.
La figure 5 illustre une station souterraine avec des supports de portes pour la mise en oeuvre du deuxième mode de réalisation de l'invention.
La figure 6 illustre une première variante du deuxième mode de réalisation de l'invention.
La figure 7 est une vue en coupe de la figure 6 au niveau du lit granulaire.
La figure 8 illustre une deuxième variante du deuxième mode de réalisation de l'invention.

### Description des modes de réalisation

La présente invention concerne un dispositif pour éliminer au moins les particules d'un flux gazeux provenant de l'air présent au sein d'une station confinée de transport en commun, notamment pour des transports ferroviaires (notamment une station souterraine de transport en commun). Par exemple, il peut s'agir d'une station de métro ou de RER (pour « Réseau Express Régional » d'Île-de-France) ou tout transport équivalent.

Par particules, on entend tout corps solide ou liquide de dimension inférieur à 100 µm, avec éventuellement une phase volatile (par exemple de type d'hydrocarbures) pouvant être adsorbée sur une phase solide. De manière non limitative, les particules selon l'invention peuvent correspondre à des particules de suie qui sont des particules fines riches en HAP (hydrocarbures aromatiques polycycliques), mais aussi des particules provenant de l'abrasion de pièces comme des particules métalliques issues de plaquettes de frein, des rails, des particules provenant de l'abrasion de pneus, mais aussi des pollens, des particules PM₁₀, qui regroupent les particules de diamètre inférieur à 10 µm, qui provoquent une altération de la santé respiratoire, des particules fines PM2,5 (particules de diamètre inférieur ou égal à 2,5 µm, constituées d'un mélange de différents composés chimiques, émises principalement lors des phénomènes de combustion ou formées par réactions chimiques à partir de gaz précurseurs présents dans l'atmosphère) qui altèrent en plus la santé cardio-vasculaire, voire des particules très fines PM1 (particules de diamètre inférieur ou égal à 1 µm), etc.

Les différentes sources d'émission vont produire en différentes proportions des particules polluantes :
- Métalliques, notamment fer métal et oxydes de fer (hématite FesOs et magnétite FesOa)
- Minérales, notamment silice cristalline (sable)
- Organiques : Hydrocarbures Aromatiques Polycycliques (HAP), composés organiques volatils (COV), composés carbonylés, carbone suie (BC, Black Carbon selon la dénomination anglaise), carbone élémentaire (EC), carbone organique (OC), oxydes d'azote (Nox) et monoxyde de carbone (CO).

Plus particulièrement, les éléments émis en extérieur ou en espace semi-confiné ou confiné comme une gare souterraine appartiennent majoritairement aux catégories suivantes :
- Matière organique,
- Espèces ioniques,
- Carbone élémentaire,
- Fer,
- Cuivre,
- Calcium,
- Zinc,
- Aluminium,
- Autres métaux.

Par « particules polluantes », au sens de l'invention on désigne donc les particules de taille comprise entre 10 nm et 100 µm dont la nature appartient aux catégories suivantes :
- Matière organique,
- Silice cristalline,
- Espèces ioniques,
- Carbone élémentaire,
- Fer,
- Cuivre,
- Calcium,
- Zinc,
- Aluminium,
- Autres métaux.

Le système de captage de particules selon l'invention permet de retenir des particules de taille et de nature différentes, notamment des particules micrométriques (PM1, PM2,5 et PM10) visées pour la qualité de l'air.

Le système de captage de particules selon l'invention comporte :
- Des moyens d'aspiration de l'air présent au sein de la station confinée (souterraine), pour aspirer l'air pollué de la station confinée (souterraine),
- Un dispositif de filtration connecté aux moyens d'aspiration, pour filtrer les particules contenues dans l'air aspiré, et
- Des moyens de distribution de l'air filtré issu du dispositif de filtration, pour distribuer l'air propre au sein de la formation confinée (souterraine).

Dans la présente demande, on appel flux d'air, l'air circulant dans le système de captage de particules. Le flux d'air peut être l'air pollué, c'est-à-dire chargé de particules, s'il est considéré avant le dispositif de filtration, et le flux d'air peut être l'air filtré (également appelé air traité ou air purifié), s'il est considéré après le dispositif de filtration.

De plus, dans la présente demande, les termes « avant », « après », ou « amont », « aval », ou « entrée », « sortie » sont considérés dans le sens de circulation du flux d'air, c'est-à-dire depuis les moyens d'aspiration vers les moyens de distribution.

En outre, en fonction de la disposition relative de ces composants, le système de captage peut comporter des conduites de transport du flux d'air pour transporter l'air d'un composant à un autre.

Selon l'invention, le dispositif de filtration comprend au moins un lit granulaire. Le lit granulaire est formé de particules solides (ou grains). Pour distinguer, dans la présente demande, les particules de l'air à capter, des particules du lit granulaire, le terme « particules » ou « particules polluantes » est associé aux particules de l'air à capter, et les termes « particules solides » et « grains » sont associés au lit granulaire. Le lit granulaire est configuré de telle sorte que la totalité du flux d'air traverse le lit granulaire. En d'autres termes, le flux d'air est forcé dans le lit granulaire. Un tel lit granulaire permet une filtration efficace et robuste des particules, notamment des particules de petites dimensions. De plus, le lit granulaire permet d'avoir une faible perte de charge, notamment en comparaison à un filtre HEPA. En outre, le lit granulaire permet une adaptation de la forme et de l'encombrement du dispositif de filtration, ce qui facilite son implémentation, en particulier dans les espaces restreints. De plus, le dispositif de filtration ne comprend que des éléments simples, ce qui le rend économique.

En outre, le dispositif de filtration est intégré dans une structure de la station confinée (souterraine). En d'autres termes le dispositif de filtration est agencé au sein d'une structure de la station confinée (souterraine). Ainsi, le système de captage ne nécessite pas l'installation d'un filtre imposant sur le quai de la station confinée (souterraine). On appelle structure de la station confinée (souterraine), un élément qui sert au fonctionnement ou la rigidité de la station confinée (souterraine). Il peut s'agir notamment d'un mur, d'un support de portes palières, d'un support de voûte, ou tout élément analogue. Cette installation spécifique est permise notamment par la nature du dispositif de filtration (lit granulaire). Le cas échéant, la structure de la station confinée (souterraine) peut être adaptée.

Selon un mode de réalisation, le lit granulaire peut être formé de particules solides (ou de grains) de taille comprise entre 0,5 mm et 1 cm, notamment entre 0,5 mm et 5 mm, de préférence entre 0,5 mm et 2 mm, et de manière préférée entre 0,5 mm et 1,8 mm. Ces gammes de valeur permettent une filtration efficace des particules les plus fines, par exemple des particules ayant une taille comprise entre une dizaine de nanomètres et une dizaine de microns. Au sein du lit granulaire, les grains peuvent avoir des diamètres similaires ou des diamètres différents. De plus, le lit granulaire peut comprendre plusieurs couches, chaque couche comprenant un diamètre de grains spécifique. Pour ce mode de réalisation, les couches peuvent être agencées dans le flux d'air de telle sorte que le flux d'air traverse les couches par ordre décroissant des diamètres de grains.

De manière avantageuse, les grains peuvent présenter une rugosité de surface élevée, c'est-à-dire une rugosité de surface des grains comprise entre 1 µm et 100 µm. En effet, ces rugosités favorisent l'attraction des particules, par exemple des particules ayant une taille comprise entre une dizaine de nanomètres et une dizaine de micromètres.

Conformément à une mise en oeuvre de l'invention, les grains peuvent être poreux. Cette porosité peut favoriser la retenue des particules polluantes dans le lit granulaire et limiter sa perte de charge. Par exemple, le volume poreux défini par le volume pore sur le volume total peut être compris entre 50 et 70 %. En variante, les grains peuvent être non poreux.

Selon une mise en oeuvre, les grains constituant le lit granulaire peuvent être d'origine minérale, organique, zéolithique ou métallique. Avantageusement, on peut utiliser des particules d'oxydes minéraux (tels que des alumines, des silices, du titane) ou des produits d'origine naturel issus d'opérations de broyage et tamisage (comme du sable, de la zéolithe naturelle, de la pouzzolane, des diatomées, etc.) pour constituer le lit granulaire. On peut également envisager des produits métalliques comme des billes d'acier, ou du verre, ou encore des produits organiques tels que des résines polymériques. Les grains peuvent également être des billes de support de catalyseur.

Selon une option de réalisation, le lit granulaire peut avoir une épaisseur comprise entre 1,5 et 10 cm, de préférence entre 2 et 5 cm. En d'autres termes, le flux d'air traverse l'épaisseur du lit granulaire, qui a une dimension comprise entre 1,5 et 10 cm, de préférence entre 2 et 5 cm. Ainsi, le lit granulaire est peu épais, favorisant ainsi son intégration dans une structure de la station confinée (souterraine). On peut envisager un lit granulaire plus épais. Toutefois, dans ce cas, les pertes de charges sont plus importantes, et l'encombrement devient plus important.

Le milieu granulaire peut reposer sur un support sous la forme d'une grille dont la taille des mailles est inférieure à la taille des grains du lit granulaire.

Selon un mode de réalisation, le lit granulaire peut être disposé au sein de la station confinée (souterraine) à hauteur d'homme. Ainsi, le remplissage et la vidange du lit granulaire peuvent être réalisés facilement. Cette vidange et ce remplissage permettent notamment de sortir les grains pour la régénération du lit granulaire, en particulier lorsque celui-ci est encrassé.

Selon un aspect de l'invention, le lit granulaire peut comprendre une ouverture de vidange gravitaire, de manière à pouvoir assurer une opération de régénération des grains du lit granulaire. De préférence, l'ouverture de vidange peut se situer dans la portion la plus basse du lit granulaire. Alternativement, le lit granulaire peut comprendre une ouverture de vidange par aspiration, de manière à pouvoir assurer une opération de régénération des grains du lit granulaire.

Selon un aspect de l'invention, le lit granulaire peut comprendre une ouverture de remplissage gravitaire, de manière à pouvoir assurer le remplissage pour la première utilisation ou après une opération de régénération des grains du lit gravitaire. De préférence, l'ouverture de remplissage peut se situer dans la portion la plus haute du lit granulaire.

Conformément à une mise en oeuvre de l'invention, le flux d'air peut traverser l'épaisseur du lit granulaire. De préférence, le flux d'air peut traverser l'épaisseur du lit granulaire selon une direction sensiblement horizontale. De cette manière, l'agencement du lit granulaire est simplifié, ce qui facilite son intégration dans une structure de la formation souterraine.

De préférence, le lit granulaire peut être plan (droit ou courbe), annulaire (tubulaire) ou cylindrique. Ces formes permettent une intégration simplifiée dans une structure de la station confinée (souterraine).

Selon un mode de réalisation de l'invention, le dispositif de filtration peut comprendre en outre un filtre aimanté. Le filtre aimanté permet notamment de filtrer les particules ferreuses magnétiques, par exemple celles issues de l'usure des freins ou des rails. Ces particules peuvent être de dimensions supérieures aux dimensions des particules filtrées par le lit granulaire. En effet, des agglomérats de particules ferreuses magnétiques peuvent se former. De manière avantageuse, le filtre aimanté peut être agencé en amont du lit de particules dans la direction du flux d'air, le dispositif de filtration étant configuré pour que la totalité du flux d'air traverse le filtre aimanté. Ainsi, le dispositif de filtration permet de filtrer dans un premier temps des particules aimantées grâce au filtre aimanté (ces particules étant possiblement plus grandes par agglomération), et, dans un deuxième temps, des particules grâce au lit granulaire. Ces deux moyens de filtration sont complémentaires pour capter les particules de l'air au sein d'une station confinée (souterraine). En particulier, sans le filtre aimanté, les particules encrassent plus vite le lit granulaire, ce qui nécessite une régénération plus fréquente du lit granulaire. De plus, même avec un filtre aimanté, le dispositif de filtration ne comprend que des éléments simples, ce qui le rend économique.

Avantageusement, les aimants peuvent être des aimants permanents ou des électroaimants.

Selon une option de réalisation, le filtre aimanté peut comporter un ensemble d'aimants parallèles et espacés entre eux. Cet ensemble d'aimants étant disposé dans un plan perpendiculaire au flux d'air dans le dispositif de filtration. Cet ensemble d'aimants peut être formé par exemple par des tiges ou des plaques aimantées reliées, formant ainsi une grille. Cette grille peut être montée dans une glissière, permettant son extraction du dispositif de filtration pour son nettoyage.

Selon une variante de réalisation, l'espacement entre les aimants peut être compris entre 1 mm et 10 mm, de préférence entre 2 mm et 6 mm. Ces gammes de valeur permettent un captage des particules ferromagnétiques, sans impacter de manière trop importante les pertes de charge.

De manière avantageuse, le dispositif de filtration peut comprendre un capteur, notamment un capteur de perte de charge (par exemple par différence de pression), pour déterminer l'encrassement du lit granulaire. Ainsi, on peut déterminer quand réaliser une régénération du lit granulaire.

De manière avantageuse, les moyens d'aspiration peuvent comprendre des moyens de prélèvement d'une part et des moyens de mise en circulation d'autre part. Le moyen de prélèvement peut par exemple une grille.

Selon une caractéristique, les moyens d'aspiration de l'air peuvent comprendre (le cas échéant en tant que moyens de mise en circulation) un ventilateur, une pompe à vide, une turbine aspirante, ou un compresseur. Par exemple, le ventilateur peut être un ventilateur tangentiel ou un ventilateur centrifuge. Le ventilateur tangentiel présente une forme allongée qui favorise son intégration dans un volume longiligne. Le ventilateur centrifuge a une forme compacte qui favorise son intégration dans un volume restreint. Les moyens de mise en circulation peuvent être placés entre 2 et 5 m des moyens de prélèvement pour diminuer le bruit au sein de la station confinée.

Selon une mise en oeuvre de l'invention, les moyens de distribution de l'air filtré peuvent comprendre une sortie de l'air filtré, par exemple sous la forme d'une grille d'aération. Cette sortie de l'air filtré peut de préférence être agencé au niveau d'un quai de la station confinée (souterraine). Ainsi, les utilisateurs des moyens de transport en commun peuvent respirer de l'air filtré, avec un taux de particules réduit, en particulier un taux de particules PM1, PM2,5 et PM10.

Selon un premier mode de réalisation, le lit granulaire peut être intégré, en étant agencé sur un mur de la station confinée (souterraine). Par exemple, le lit granulaire peut remplacer un panneau publicitaire au sein de la station confinée (souterraine). Pour ce premier mode de réalisation, le lit de particules peut être plan, pour limiter l'encombrement du système de captage des particules. En d'autres termes, l'épaisseur du lit granulaire est sensiblement perpendiculaire au mur, les autres dimensions du lit granulaire sont agencées contre le mur. Ainsi, pour ce premier mode de réalisation, le lit granulaire n'entrave pas le déplacement des utilisateurs sur un quai de la station confinée (souterraine). Ce premier mode de réalisation peut être adapté sur toutes les stations confinées (souterraines).

Pour ce premier mode de réalisation, le lit de particules peut s'adapter à la forme du mur, et peut être notamment vertical et/ou courbe.

Pour ce premier mode de réalisation, le lit granulaire peut comprendre une entrée d'air du côté du mur de la station confinée (souterraine), et une sortie d'air du côté opposé au mur de la station confinée (souterraine). Pour ce mode de réalisation, le lit granulaire peut être traversé sensiblement horizontalement par le flux d'air. En d'autres termes, le lit granulaire est traversé depuis le côté du mur vers l'intérieur de la station confinée (souterraine).

Selon une variante de ce mode de réalisation, le lit granulaire peut avoir une ouverture de remplissage au sommet du lit granulaire, et une ouverture de vidange au fond du lit granulaire. Le lit granulaire, en vue de face (face au mur de la station confinée/souterraine) peut être sensiblement rectangulaire, circulaire, etc. Selon un exemple de réalisation, le lit granulaire, en vue de face peut avoir sensiblement une forme hexagonale. Ainsi, la section augmente au sommet et diminue au fond, ce qui peut former une trémie à chaque extrémité pour faciliter respectivement le remplissage et la vidange du lit granulaire.

De manière avantageuse, les moyens de distribution peuvent être situés directement sur le lit granulaire, du côté du lit granulaire dirigé vers la station confinée (souterraine). Ainsi, aucune conduite n'est nécessaire entre le dispositif de filtration et les moyens de distribution. Alternativement, les moyens de distribution peuvent être éloignés, et reliés au dispositif de filtration par une conduite.

Selon un exemple, la section de passage du lit granulaire peut être comprise entre 0,3 et 3 m², de préférence entre 0,5 et 1 m². En effet, ces sections de passage permettent de traiter au moins un flux d'air compris entre 2000 et 7500 m³/h, pour traiter une quantité d'air importante au sein de la station confinée (souterraine). De plus, la vitesse du débit d'air au sein du dispositif de filtration peut être de l'ordre de 5 m/s. Selon un exemple non limitatif, le lit granulaires peut avoir une hauteur d'environ 1,3 m et une largeur d'environ 0,5 m et une épaisseur de 5 cm. La hauteur de 1,3 m présente en outre l'avantage de rester à hauteur humaine (même s'il est un peu surélevé) pour réaliser de manière simple les opérations de remplissage et de vidange du lit granulaire.

De plus, pour ce mode de réalisation, le dispositif de filtration peut comporter en outre un filtre aimanté. Le filtre aimanté peut être agencé en amont du lit granulaire. Pour cela, le filtre aimanté peut comprendre un caisson plan comportant des aimants, le caisson étant agencé entre le mur et le lit granulaire. De préférence, le caisson est peu épais. Pour cette réalisation, le flux d'air travers successivement les moyens d'aspiration, le caisson du filtre aimanté, le lit granulaire puis les moyens de distribution.

Selon une réalisation de ce premier mode de réalisation, les moyens d'aspiration peuvent être agencés sur le pourtour du plan du lit granulaire. Pour cette réalisation, les moyens d'aspiration peuvent comprendre au moins un ventilateur tangentiel. Pour cette réalisation les moyens d'aspiration et le dispositif de filtration sont situés à proximité l'un de l'autre, ce qui simplifie le système de captage.

Alternativement, les moyens d'aspiration peuvent être agencés sur le sol d'un quai de la station confinée (souterraine). Pour cette réalisation, les moyens d'aspiration peuvent comprendre au moins un ventilateur centrifuge. De plus, une conduite peut connecter les moyens d'aspiration du dispositif de filtration. Cette variante permet d'éloigner l'aspiration de la distribution, ce qui permet d'éviter que l'air aspiré provienne de l'air qui vient d'être filtré.

Une variante préférée de ce premier mode de réalisation comporte deux moyens d'aspiration situés de part et d'autre d'un dispositif de filtration. Cette variante préférée assure une répartition homogène du flux d'air dans le dispositif de filtration, en particulier dans le lit granulaire.

Selon un deuxième mode de réalisation, lorsque la station confinée (souterraine) comprend des portes palières (portes automatiques situées au bord de quais permettant la sécurité et la fluidité des utilisateurs dans les transports), le lit granulaire peut être intégré dans les supports de portes. Un tel support de porte peut avoir sensiblement la forme d'un U inversé avec une section sensiblement circulaire, dont les barres sensiblement verticales (appelés piliers) sont agencées au bord du quai, et la courbure du U est au-dessus des voies de transport. Par exemple, le lit granulaire peut être placé dans les piliers verticaux du U inversé. Pour ce premier mode de réalisation, le lit de particules peut être annulaire ou cylindrique, pour limiter l'encombrement du système de captage des particules. Alternativement, lorsque la station confinée (souterraine) ne comprend pas de portes, elle peut comprendre un support prévu dans la voûte de la station confinée (souterraine), un tel support peut avoir une forme de U inversé ou d'une portion d'ellipse. Dans la suite de la description, un tel support s'appelle un support de voûte. Le deuxième mode de réalisation s'applique ainsi aux supports de portes ou aux supports de voûte. Dans les deux cas (support de portes et support de voûte), les piliers peuvent être courbes ou droits.

De préférence, le lit granulaire peut être intégré dans les piliers du support de portes ou du support de voûte. Ce mode de réalisation permet d'avoir le lit granulaire à hauteur d'homme pour son remplissage et/ou sa vidange. De plus, ce mode de réalisation permet une distribution de l'air filtré à hauteur d'homme.

De manière préférée, le système de captage peut comprendre deux lits granulaires, par exemple un dans chaque pilier du support de portes ou du support de voûte, favorisant ainsi la distribution de l'air dans la station confinée (souterraine). Dans cette configuration, l'air aspiré est réparti en deux flux dirigés de part et d'autre des moyens d'aspiration. En variante, le système de captage peut comprendre un unique lit granulaire d'un unique côté du support de portes ou du support de voûte, ce qui permet de simplifier l'intégration.

Pour ce deuxième mode de réalisation, pour lequel le lit granulaire est annulaire (en d'autres termes tubulaire), le lit granulaire peut comprendre une entrée d'air au centre de la section du support de portes ou du support de voûte, et une sortie d'air en périphérie du support de portes, ou en périphérie du support de voûte. Pour ce mode de réalisation, le lit granulaire peut être traversé sensiblement horizontalement par le flux d'air.

Pour ce deuxième mode de réalisation, pour lequel le lit granulaire est cylindrique, le lit granulaire peut comprendre une entrée d'air sur la face supérieure du lit granulaire, et une sortie d'air sur la face inférieure du lit granulaire. Pour ce mode de réalisation, le lit granulaire peut être traversé sensiblement verticalement par le flux d'air.

Pour cette mise en oeuvre, une conduite de transfert du flux d'air entre les moyens d'aspiration et le dispositif de filtration peut être formée au sein du support de portes ou du support de voûte. Cette mise en oeuvre permet une intégration complète du système de captage de particules.

De manière avantageuse, les moyens de distribution peuvent être situés directement sur le lit granulaire au sein du support, et être dirigé vers la station confinée (souterraine), de préférence en direction du quai. Ainsi, aucune conduite n'est nécessaire entre le dispositif de filtration et les moyens de distribution. Alternativement, les moyens de distribution peuvent être éloignés, et reliés au dispositif de filtration par une conduite.

De plus, pour ce mode de réalisation, le dispositif de filtration peut comporter en outre un filtre aimanté. Le filtre aimanté peut être agencé en amont du lit granulaire. Pour cela, le filtre aimanté peut comprendre un caisson cylindrique comprenant des aimants, le caisson étant agencé au-dessus du lit granulaire, par exemple dans les piliers et/ou dans la partie arquée (au sommet) du support de portes ou du support de voûte. Pour cette réalisation, le flux d'air traverse successivement les moyens d'aspiration, le caisson du filtre aimanté, le lit granulaire puis les moyens de distribution.

Selon une réalisation de ce deuxième mode de réalisation, les moyens d'aspiration peuvent être agencés au sommet du support de porte ou du support de voûte. De cette manière, les moyens d'aspiration peuvent capter les particules de l'air le plus pollué directement au-dessus des voies de transport. Pour cette réalisation, les moyens d'aspiration peuvent comprendre au moins un ventilateur tangentiel. Pour cette réalisation les moyens d'aspiration et le dispositif de filtration sont situés à proximité, ce qui simplifie le système de captage.

En outre, l'invention concerne une station confinée, par exemple une station souterraine de transport en commun, qui comporte :
- Au moins une voie de transport en commun,
- Au moins un quai, bordant la voie de transport en commun,
- Au moins un mur délimitant la station confinée (souterraine), et
- Au moins un système de captage de particules de l'air selon l'une quelconque des variantes ou des combinaisons de variantes décrites précédemment, pour lequel le lit granulaire du dispositif de filtration est intégré dans la structure de la station confinée (souterraine).

La station confinée (souterraine) peut également comprendre des portes palières au bord du quai, avec au moins un support de portes et/ou au moins un support de voûte. Dans ce cas, le système de captage peut être conforme au deuxième mode de réalisation de l'invention.

Pour le deuxième mode de réalisation de l'invention, la station confinée (souterraine) peut comprendre plusieurs supports de portes et/ou supports de voûte équipés d'un système de captage de particules.

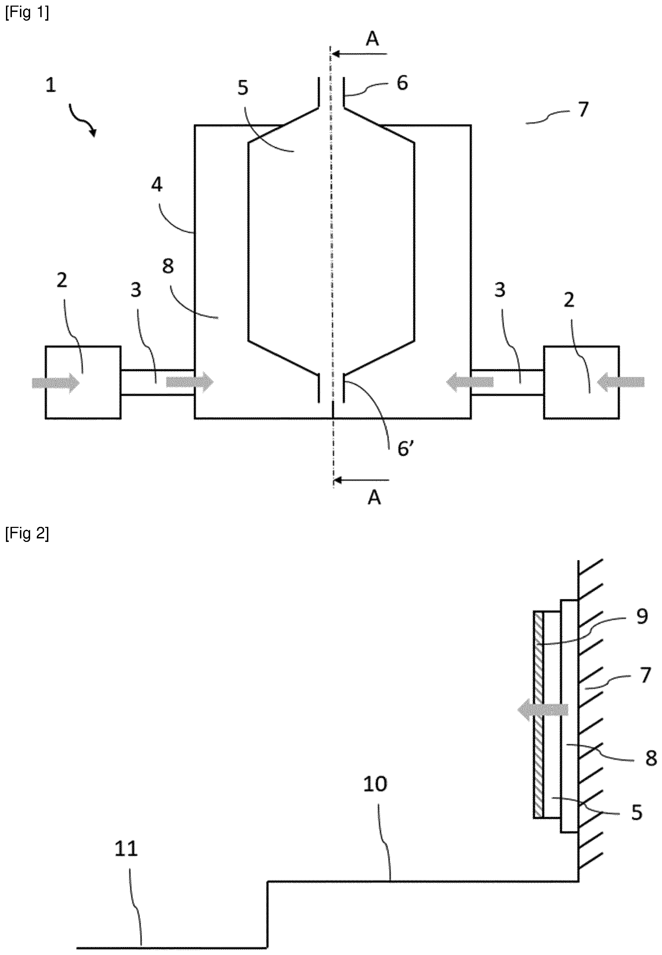

Les figures 1 et 2 illustrent, schématiquement et de manière non limitative, une première variante du premier mode de réalisation de l'invention. La figure 1 est une vue de face, et la figure 2 est une vue de profil, qui est une vue en coupe de la figure 1 selon la coupe A-A. Sur ces figures, la circulation du flux d'air est représentée par les flèches grisées. Le système de captage des particules 1 comprend deux moyens d'aspiration 2, pour ce mode de réalisation par exemple un ventilateur centrifuge, deux conduites 3, un dispositif de filtration 4 et des moyens de distribution 9. Les conduites 3 relient les moyens d'aspiration 2 au dispositif de filtration 4. Le dispositif de filtration 4 est fixé sur un mur 7 de la station souterraine. La station souterraine (représentée partiellement) comprend en outre un quai 10 et une voie de transport en commun 11. Ce mode de réalisation ne perturbe pas le déplacement des usagers sur le quai 10, car il est fixé au mur et est peu épais. Le dispositif de filtration 4 comprend un caisson plan 8 avec des éléments aimantés pour former un filtre aimanté. La caisson plan 8 a une forme parallélépipédique. Le caisson plan 8 avec le filtre aimanté est fixé sur le mur 7, et le lit granulaire 5 est agencé sur le caisson plan 8, et les moyens de distribution 9 sont agencés sur le lit granulaire 5. Le lit granulaire 5 a une forme hexagonale avec une ouverture de remplissage 6 au sommet du lit granulaire 5, et une ouverture de vidange 6' au fond du lit granulaire 5.

Pour ce mode de réalisation, l'air entre dans les moyens d'aspiration 2, puis dans la conduite 3, puis dans le caisson plan 8, puis dans le lit granulaire 5, et ressort filtré par les moyens de distribution 9. De plus, la régénération du lit granulaire s'effectue par vidange des grains du lit granulaire 5 par l'ouverture de vidange 6', par nettoyage des grains, puis par remplissage du lit granulaire 5 par l'ouverture de remplissage 6.

Cette variante illustre deux moyens d'aspiration 2, permettant ainsi une répartition homogène de l'air aspiré dans le dispositif de filtration. Toutefois, en alternative, un seul moyen d'aspiration peut être prévu, pour diminuer le nombre de composants du système de captage des particules, ou un plus grand nombre de moyens d'aspiration peuvent être prévus par exemple quatre ou six.

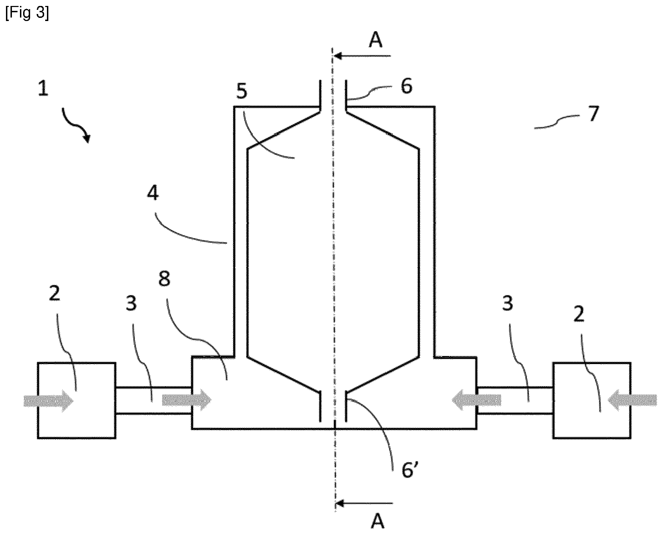

La figure 3 illustre, schématiquement et de manière non limitative, une deuxième variante du premier mode de réalisation de l'invention. La figure 3 est une vue de face. La vue en coupe selon l'axe AA est identique à la vue en coupe de la figure 2. Les éléments identiques à la première variante ne sont pas redécrits. Cette deuxième variante se différencie de la première variante par la forme du caisson plan 8. Pour cette deuxième variante, le caisson plan 8 a sensiblement une forme de T inversé. Cette forme limite la surface du dispositif de filtration sur le mur, tout en assurant une bonne distribution de l'air sur le lit granulaire.

Cette variante illustre deux moyens d'aspiration 2, permettant ainsi une répartition homogène de l'air aspiré dans le dispositif de filtration. Toutefois, en alternative, un seul moyen d'aspiration peut être prévu, pour diminuer le nombre de composants du système de captage des particules, ou un plus grand nombre de moyens d'aspiration peuvent être prévus par exemple quatre ou six.

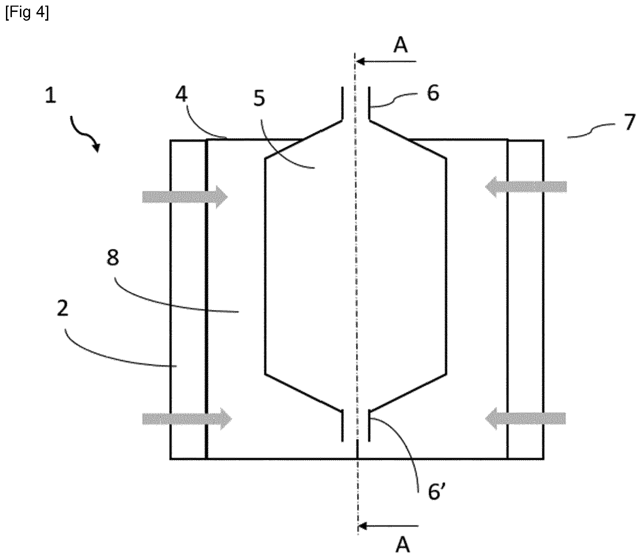

La figure 4 illustre, schématiquement et de manière non limitative, une troisième variante du premier mode de réalisation de l'invention. La figure 4 est une vue de face. La vue en coupe selon l'axe AA est identique à la vue en coupe de la figure 2. Les éléments identiques à la première variante ne sont pas redécrits. Cette troisième variante se différencie de la première variante par la forme et la disposition des moyens d'aspiration 2. Pour cette variante de réalisation, les moyens d'aspiration 2 sont agencés sur le pourtour du caisson plan 8. Pour la variante illustrée, les moyens d'aspiration 2 sont agencés à gauche et à droite du caisson plan 8. En variante ou cumulativement, des moyens d'aspiration peuvent être agencés sur une partie supérieure du caisson plan 8 et/ou sur une partie inférieure du caisson plan 8 (ces mises en oeuvre ne sont pas représentées). Ils peuvent avoir une forme longiligne, et être des ventilateurs tangentiels. Pour cette variante du premier mode de réalisation, aucune conduite n'est utilisée entre les moyens d'aspiration 2 et le dispositif de filtration 4.

Cette variante illustre deux moyens d'aspiration 2, permettant ainsi une répartition homogène de l'air aspiré dans le dispositif de filtration. Toutefois, en alternative, un seul moyen d'aspiration peut être prévu, pour diminuer le nombre de composants du système de captage des particules.

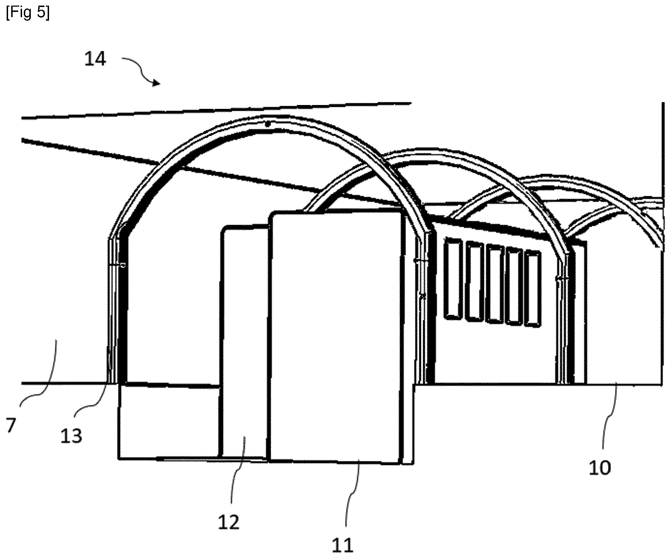

La figure 5 illustre, schématiquement et de manière non limitative, une station souterraine de transport en commun avec des supports de portes. La station souterraine 14 comporte deux voies de transport 11 (le nombre de voies de transports est non limitatif, il peut y avoir qu'une seule voie ou un nombre de voies supérieures à deux), pour le passage de véhicules de transport 12 ainsi que deux quais 10 (le nombre de quais est non limitatif, il peut y avoir qu'un seul quai, notamment s'il y qu'une seule voie de transport 11), qui sont bordés par des murs 7. De plus, la station souterraine 14 comprend des portes palières (non représentées) au bord du quai. Ces portes palières sont supportées par des supports de portes 13. Les supports de portes 13 ont sensiblement la forme d'un U inversé : avec deux parties sensiblement verticales au bord du quai et une partie voûtée au-dessus des voies de transport 11.

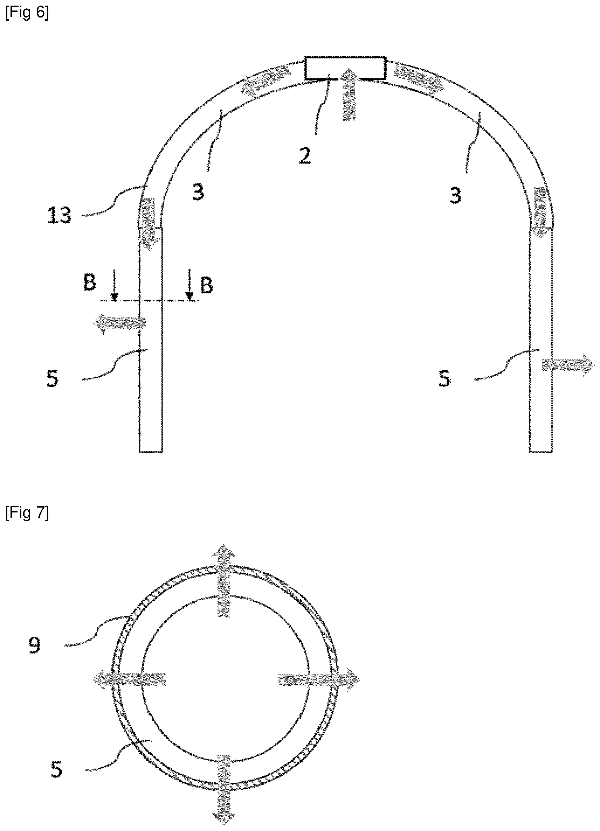

Les figures 6 et 7 illustrent schématiquement et de manière non limitative, une première variante du deuxième mode de réalisation de l'invention. La figure 6 est une vue de face, et la figure 7 est une vue de profil, qui est une vue en coupe de la figure 6 selon la coupe B-B. Sur ces figures, la circulation du flux d'air est représentée par les flèches grisées. Le système de captage des particules comprend un moyen d'aspiration 2, pour ce mode de réalisation par exemple un ventilateur centrifuge, deux conduites 3, deux dispositifs de filtration avec chacun un lit granulaire 5 et des moyens de distribution 9. Le moyen d'aspiration 2 est situé au sommet du support de portes 13. De plus, il est dirigé vers les voies de transport (non représentées) pour aspirer l'air le plus pollué. Les conduites 3 sont formées dans le support de portes 13 pour relier le moyen d'aspiration 2 aux deux lits granulaires 5. Les lits granulaires 5 ont sensiblement une forme annulaire. L'air à filtrer arrive au centre du support, traverse radialement et sensiblement horizontalement le lit granulaire 5. Le moyen de distribution 9 entoure le lit granulaire 5 pour distribuer l'air filtré autour du support de portes 13. Selon une option de réalisation non représentée, le moyen de distribution 9 peut être agencé sur le support de portes, uniquement du côté du quai. Ainsi, l'air filtré profite aux utilisateurs des transports en communs, et n'est pas directement aspiré par les moyens d'aspiration.

Pour ce mode de réalisation, l'air circule dans le moyen d'aspiration, puis dans les conduites 3, puis dans les lits granulaires 5, et ressort filtré par les moyens de distribution 9.

Cette variante illustre deux lits granulaires 5, permettant ainsi une distribution homogène de l'air filtré dans la station souterraine. Toutefois, en alternative, un seul lit granulaire peut être prévu, pour diminuer le nombre de composants du système de captage des particules, ou lorsqu'un seul quai borde les voies de transport.

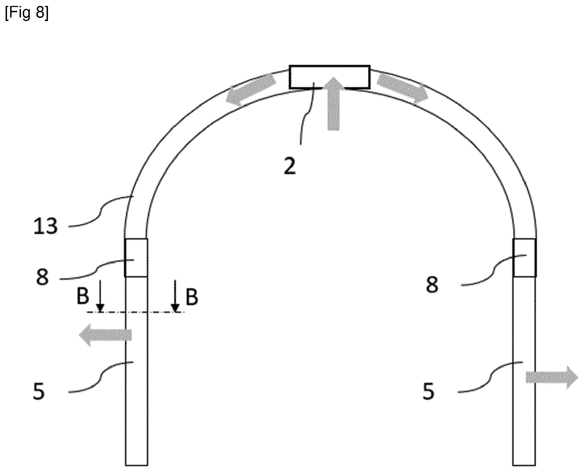

La figure 8 illustre, schématiquement et de manière non limitative, une deuxième variante du deuxième mode de réalisation de l'invention. La figure 8 est une vue de face. La vue en coupe selon l'axe BB est identique à la vue en coupe de la figure 7. Les éléments identiques à la première variante ne sont pas redécrits. Cette deuxième variante se différencie de la première variante par l'ajout d'un filtre aimanté 8, ici sous une forme cylindrique et situé au-dessus du lit granulaire. L'ensemble filtre aimanté 8 et lit granulaire 5 forme le dispositif de filtration.

Pour ce mode de réalisation, l'air circule dans le moyen d'aspiration, puis dans les conduites 3, puis dans le filtre aimanté 8, puis dans les lits granulaires 5, et ressort filtré par les moyens de distribution 9.

Cette variante illustre deux dispositifs de filtration, permettant ainsi une distribution homogène de l'air filtré dans la station souterraine. Toutefois, en alternative, un dispositif de filtration peut être prévu, pour diminuer le nombre de composants du système de captage des particules, ou lorsqu'un seul quai borde les voies de transport.

Comme il va de soi, l'invention ne se limite pas aux seules formes de réalisation décrites ci-dessus à titre d'exemple, elle embrasse au contraire toutes les variantes de réalisation.

## Revendications

1. Station confinée de transport en commun comprenant un système de captage de particules de l'air au sein de ladite station confinée, ledit système de captage de particules (1) comprend des moyens d'aspiration de l'air (2) présent au sein de ladite station confinée, un dispositif de filtration (4) de l'air issu desdits moyens d'aspiration (2), et des moyens de distribution (9) de l'air filtré issu dudit dispositif de filtration au sein de ladite station confiné, **caractérisée en ce que** ledit dispositif de filtration (4) comprend au moins un lit granulaire (5) traversé par la totalité du flux d'air dudit dispositif de filtration (4), et **en ce que** ledit dispositif de filtration (4) est intégré dans une structure de ladite station confinée.

2. Station confinée de transport en commun selon la revendication 1, dans laquelle ledit lit granulaire (5) est situé à hauteur d'homme.

3. Station confinée de transport en commun selon l'une des revendications précédentes, dans laquelle ledit dispositif de filtration (4) comprend en outre un filtre aimanté (8), ledit filtre aimanté (8) étant agencé en amont dudit lit granulaire (5) dans la circulation du flux d'air, ledit filtre aimanté (8) étant traversé par la totalité du flux d'air dudit dispositif de filtration (4).

4. Station confinée de transport en commun selon l'une des revendications précédentes, dans laquelle ledit lit granulaire (5) est agencé sur un mur (7) de ladite station confinée.

5. Station confinée de transport en commun selon la revendication 4, dans laquelle ledit lit granulaire (5) est plan.

6. Station confinée de transport en commun selon l'une des revendications 4 ou 5, dans laquelle ledit lit granulaire (5) comprend une entrée d'air du côté du mur (7) de ladite station confinée et une sortie d'air du côté opposé au mur (7) de ladite station confinée, ledit lit granulaire (5) étant traversé sensiblement horizontalement par ledit flux d'air.

7. Station confinée de transport en commun selon l'une des revendications 4 à 6, dans laquelle lesdits moyens d'aspiration (2) sont agencés sur un sol d'un quai (10) de ladite station confinée ou sur le pourtour desdits moyens de filtration (4).

8. Station confinée de transport en commun selon l'une des revendications 1 à 3, dans laquelle ledit lit granulaire (5) est agencé dans un support de portes (13) bordant au moins une voie de circulation (11) de transport en commun de ladite station confinée, ou dans un support de voûte de ladite station confinée.

9. Station confinée de transport en commun selon la revendication 8, dans laquelle ledit lit granulaire (5) est annulaire.

10. Station confinée de transport en commun selon la revendication 9, dans laquelle ledit lit granulaire (5) comprend une entrée d'air au centre dudit support de portes (13) ou dudit support de voûte, et une sortie d'air à la périphérie de la base dudit support de portes (13) ou dudit support de voûte, ledit lit granulaire (5) étant traversé sensiblement horizontalement par ledit flux d'air.

11. Station confinée de transport en commun selon l'une des revendications 8 à 10, dans laquelle lesdits moyens d'aspiration (2) sont agencés au sommet dudit support de portes (13) ou dudit support de voûte.

12. Station confinée de transport en commun selon l'une des revendications précédentes, dans laquelle lesdits moyens d'aspiration (2) comprennent un ventilateur, de préférence un ventilateur tangentiel ou un ventilateur centrifuge.

13. Station confinée de transport en commun selon l'une des revendications précédentes, dans laquelle ledit lit granulaire (5) comprend une ouverture de vidange gravitaire (6') et/ou une ouverture de remplissage gravitaire (6).

14. Station confinée de transport en commun selon l'une des revendications précédentes, dans laquelle le lit granulaire (5) comprend des particules solides ayant une taille comprise entre 0,5 mm et 5 mm, et une rugosité comprise entre 1 et 100 µm.

15. Station confinée de transport en commun selon l'une des revendications précédentes, dans laquelle ledit lit granulaire (5) a une épaisseur comprise entre 1,5 et 10 cm, de préférence entre 2 et 5 cm.
